# FASCICULE DE BREVET EUROPEEN

(11) **EP 1 717 409 B1**
(45) Date de publication et mention de la délivrance du brevet: **27.08.2014**
(21) Numéro de dépôt: 06112133.1
(22) Date de dépôt: 31.03.2006
(51) Int. Cl.: E06B 9/50, B60J 1/20

(54) **Store à enrouleur à bague à rattrapage de jeu, et véhicule correspondant**
Rollvorhang mit Spielausgleichseinrichtung und entsprechendes Fahrzeug
Roller blind with lash adjuster and corresponding vehicle

(30) Priorité: 28.04.2005 FR 0504421
(43) Date de publication de la demande: 02.11.2006
(73) Titulaire: Advanced Comfort Systems France SAS - ACS France, 79300 Bressuire (FR)
(72) Inventeur: Jincheleau, Michel, 79320 Moncoutant (FR)
(74) Mandataire: Bioret, Ludovic

(56) Documents cités:
- DE-U1- 29 923 460
- US-A- 4 834 164

## Description

Le domaine de l'invention est celui des stores à enrouleur, notamment pour les véhicules automobiles.

De façon classique, les stores à enrouleur comprennent un tube d'enroulement, sur lequel est montée une toile d'occultation mobile entre deux positions : une position d'occultation, dans laquelle la toile est déployée, par exemple en regard d'une vitre latérale ou d'une vitre arrière d'un véhicule, et une position repliée, dans laquelle au moins la plus grande partie de la toile est enroulée autour du tube d'enroulement.

Les extrémités du tube d'enroulement reçoivent généralement chacune un palier, permettant la rotation du tube. Ces paliers peuvent être directement fixés à la structure du véhicule ou montés dans un boîtier recevant le tube enrouleur et la toile d'occultation lorsqu'elle est repliée.

De plus en plus souvent cependant, on supprime le boîtier, tant pour des raisons de coût de revient que pour des raisons d'encombrement. Les paliers peuvent ainsi être directement montés dans des emplacements prévus à cet effet, par exemple dans une portière ou sous une lunette arrière d'un véhicule.

Des moyens de rappel, par exemple un ressort spiral, sont prévus pour ramener la toile dans la position repliée. Le déploiement de la toile, qui peut être manuel, en agissant sur une barre de tirage, ou motorisé, assure le bandage de ces moyens de rappel. Le repliement se fait automatiquement, sous l'effet de ces moyens de rappel.

Pour obtenir ce résultat, une extrémité des moyens de rappel est solidarisée à l'un des paliers, dit premier palier. L'autre extrémité des moyens de rappel est solidaire du tube enrouleur, par exemple via des moyens de fixation montés à l'intérieur du tube.

Selon une technique connue de l'art antérieur, les paliers peuvent présenter une portion pénétrant à l'intérieur du tube, dont le diamètre extérieur est adapté au diamètre intérieur du tube, pour permettre une rotation efficace de ce dernier, et une portion externe, destinée à être montée de façon fixe dans un boîtier. Les moyens de rappel peuvent alors par exemple être solidarisés à un prolongement de la portion interne.

Cependant, un des inconvénients de cette technique est le jeu radial pouvant exister entre le palier, et plus précisément la portion du palier pénétrant dans le tube, et le tube d'enroulement.

En effet, des légères variations du diamètre de l'un et/ou l'autre sont possibles et peuvent présenter un jeu radial à l'origine de vibrations de l'ensemble, notamment lorsqu'un véhicule automobile équipé par un tel store est en mouvement.

De plus, des bruits dus aux vibrations peuvent également survenir et être particulièrement gênants.

Certaines techniques de l'art antérieur prévoient la présence d'une bague cylindrique insérée à l'intérieur du tube d'enroulement et généralement solidaire en rotation du tube. La portion du palier pénétrant à l'intérieur du tube d'enroulement est alors logée à l'intérieur de la bague, et est mobile en rotation par rapport à celle-ci.

Cependant, si de telles bagues sont utilisées pour améliorer le centrage du palier par rapport à l'axe de rotation du tube ou pour réduire les frottements,elles ne permettent cependant pas d'éliminer le jeu pouvant exister entre la bague et le palier.

Le document DE 29923460 U1 décrit un store conforme au préambule de la revendication 1.

L'invention a notamment pour objectif de pallier ces inconvénients de l'art antérieur.

Plus précisément, l'invention a pour objectif de fournir une technique permettant de s'affranchir des jeux éventuels existants au niveau du tube d'enroulement et d'au moins un des paliers.

Un objectif de l'invention est en particulier de compenser le jeu radial pouvant exister entre le tube, le palier, et éventuellement une bague selon les techniques de l'art antérieur décrites précédemment, de façon à éviter les vibrations et les bruits qu'il est susceptible de générer.

Encore un autre objectif de l'invention est de fournir une telle technique, ne nécessitant aucune intervention autre que celle du montage du store et notamment aucun réglage après ce montage.

L'invention a également pour objectif de fournir une telle technique, qui ne rende pas plus complexe, ni plus coûteuse la fabrication des stores à enrouleur.

Plus généralement, l'invention a pour objectif de fournir des stores à enrouleur présentant sensiblement la même complexité et le même coût que les stores connus, tout en s'affranchissant des problèmes de tolérance des dimensions des différents éléments par rapport au jeu radial.

Ces objectifs, ainsi que d'autres qui apparaîtront par la suite, sont atteints à l'aide d'un store à enrouleur comprenant un tube d'enroulement, équipé d'un palier présentant une portion pénétrante logée à l'intérieur dudit tube d'enroulement à chacune de ses extrémités, et auquel est solidarisée une extrémité d'une toile d'occultation, mobile entre une position déployée et une position repliée, dans laquelle elle est essentiellement enroulée autour dudit tube d'enroulement.
Selon l'invention, le store comprend au moins une bague déformable montée à l'intérieur dudit tube d'enroulement autour d'une portion pénétrante d'un premier palier, ladite bague présentant une partie d'extrémité comprenant :
- au moins deux renflements situés sur un même diamètre de la bague ; et
- au moins deux pattes distinctes, dont les extrémités libres sont dirigées vers l'intérieur de ladite bague ;
lesdites pattes étant situées dans le prolongement desdits renflements, de façon que, lorsque ladite portion pénétrante dudit premier palier est logée dans ladite bague, lesdites extrémités desdites pattes sont en contact avec ladite portion pénétrante dudit premier palier et lesdits renflements sont en contact avec ledit tube d'enroulement.

Ainsi la bague montée dans le tube d'enroulement permet de compenser et de supprimer le jeu radial éventuel entre le palier et le tube d'enroulement en assurant un contact simultanément avec l'intérieur du tube et avec l'extérieur du palier.

L'extrémité de bague dirigée vers l'intérieur du tube d'enroulement présente en effet au moins deux renflements, au niveau desquels le diamètre extérieur de la bague est plus important que pour le reste de la bague et au moins deux pattes situées dans le prolongement des renflements. Ainsi, lors du montage de la bague à l'intérieur du tube et de la portion pénétrante du palier à l'intérieur de la bague, les renflements de celle-ci seront en contact avec l'intérieur du tube d'enroulement et les extrémités légèrement recourbées des pattes de la bague sont en contact avec la surface extérieure du palier. La bague permet ainsi de supprimer le jeu radial éventuel.

Le fait que l'extrémité de la bague présente des pattes distinctes, c'est-à-dire légèrement espacées les unes des autres contribue à conférer à la bague une certaine souplesse lui permettant de s'adapter aux dimensions du tube et du palier et de compenser le jeu. En effet, une bague creuse cylindrique dont une extrémité serait simplement recourbée vers l'intérieur de façon continue, serait beaucoup moins souple à se niveau et donc moins efficace, puisqu'elle ne permettrait pas d'assurer un contact simultané avec l'intérieur du tube et l'extérieur du palier.

La bague permet ainsi de limiter les vibrations en supprimant le jeu radial et permet, en outre, une certaine tolérance lors de la fabrication quant aux dimensions du diamètre intérieur du tube et du diamètre extérieur de la portion pénétrante du palier. La bague a en effet pour rôle de s'adapter légèrement aux dimensions de l'un et l'autre tout en assurant un contact simultanément au niveau de ces deux éléments, grâce à sa forme combinant une zone élargie de diamètre supérieur prolongée par des pattes dirigées vers l'intérieur.

Le matériau dans lequel est réalisée la bague, pourra avantageusement être choisi de façon qu'il autorise une certaine déformabilité de la bague lorsque celle-ci est montée. De plus, l'épaisseur de la bague pourra également être choisie de façon à permettre la déformabilité de la bague. Celle-ci pourra ainsi s'adapter aux dimensions respectives du tube et du palier et jouer son rôle de compensation et de suppression du jeu radial.

Un tel store à enrouleur pourra en particulier être utilisé pour équiper un véhicule automobile, et lorsque celui-ci est en mouvement, la présence de la bague permet d'éliminer les bruits pouvant être associés aux vibrations de l'ensemble lorsqu'un jeu radial existe.

De façon avantageuse, une telle bague pourra être utilisée pour équiper les deux extrémités du tube d'enroulement.

Une fois le store monté, la bague équipant l'extrémité du store pourra être solidaire en rotation du tube d'enroulement ou du palier ou d'aucun de ces deux élément, du moment que celle-ci autorise la rotation du tube d'enroulement par rapport au palier monté fixe sur le véhicule.

En particulier, la bague pourra être solidaire en rotation du tube d'enroulement et libre en rotation par rapport au palier, ou alors, la bague pourra être solidaire en rotation du palier et libre en rotation par rapport au tube. La bague pourra enfin également être mobile en rotation à la fois par rapport au tube et par rapport au palier.

L'un ou l'autre de ces modes de réalisation pourra être choisi de manière arbitraire lors du montage, par exemple en collant la bague au tube d'enroulement, ou au contraire être aléatoire, en fonction de la répartition des contraintes et des forces de frottement.

De façon avantageuse, ladite bague est réalisée dans un matériau présentant un faible coefficient de frottement. En effet, on comprend bien l'intérêt de limiter les frottements de la bague pour ne pas gêner la rotation du tube par rapport au(x) palier(s).

Préférentiellement, la bague est réalisée dans une même pièce de matériau.

Avantageusement, lesdits renflements forment une couronne continue dont la surface supérieure est en contact avec ledit tube d'enroulement. On pourra en effet prévoir que les renflements forment une couronne circulaire (de hauteur constante) au niveau de laquelle le diamètre extérieur de la bague est supérieur au diamètre moyen de celle-ci. La surface supérieure est alors en contact continu avec un diamètre intérieur du tube, la largeur du contact étant déterminé par la forme du renflement.

La hauteur du renflement pourra par exemple être de 0,3 mm par rapport à la section cylindrique de la bague en amont du renflement, du côté situé vers l'extérieur du tube.

On pourra bien sûr envisager d'autres variantes mettant en oeuvre une bague présentant trois ou quatre renflements, répartis de préférence de manière homogène sur un même diamètre de la bague. Dans le cas où seuls deux renflements sont présents, ceux-ci sont de préférence diamétralement opposés.

De la même façon, un nombre variable de pattes pourra être prévu. Lorsque seules deux pattes sont présentes, celles-ci seront de préférence diamétralement opposées et relativement large de façon à assurer un appui efficace contre le palier.

On pourra également prévoir de façon avantageuse trois ou quatre pattes réparties de façon homogène, par exemple diamétralement opposées deux à deux dans le cas de quatre pattes. Celles-ci pourront par exemple être toutes de mêmes dimensions pour une bague et/ou équidistantes les unes des autres.

Avantageusement, ladite bague est réalisée par moulage. La bague peut en effet être moulée dans une même pièce de matériau.

Le nombre de pattes pour une bague pourra alors être choisi en fonction du moule utilisé. En particulier, pour un moule associé à un démoulage de la bague selon une direction perpendiculaire à l'axe longitudinal de la bague, il pourra être avantageux de réaliser une bague présentant quatre pattes plutôt que trois, une répartition des pattes face à face deux à deux étant alors appropriée à un tel démoulage.

De façon préférée, le store à enrouleur comprend un bouchon creux de surface extérieure cylindrique monté autour de ladite portion pénétrante dudit premier palier, et solidaire en rotation dudit premier palier, de façon que lesdites extrémités desdites pattes de ladite bague soient en contact avec la surface extérieure dudit bouchon.

En effet, on pourra prévoir la présence d'une pièce supplémentaire appelée bouchon, fixée autour du palier, et notamment de la portion pénétrante de celui-ci.

Dans ce cas, c'est contre le bouchon que les extrémités recourbées des pattes seront en contact, et la première extrémité des moyens de rappel pourra alors éventuellement être solidarisée à l'extrémité du bouchon plutôt qu'au palier.

Avantageusement, la section intérieure dudit bouchon est de forme polygonale et la section extérieure de ladite portion pénétrante dudit premier palier autour de laquelle elle est montée ledit bouchon est d'une forme polygonale complémentaire.

La portion pénétrante du palier, ou du bouchon lorsqu'il est présent, pourra présenter un méplat ou une rainure, avec lequel lesdites extrémités desdites pattes sont en contact.
L'invention concerne également les véhicules automobiles équipés d'un tel store à enrouleur.

D'autres caractéristiques et avantages de l'invention apparaîtront plus clairement à la lecture de la description suivante de différents modes de réalisation de l'invention, donnés à titre de simples exemples illustratifs et non limitatifs, et des dessins annexés, parmi lesquels :
- la figure 1 illustre la coupe longitudinale d'un store à enrouleur selon l'art antérieur ;
- la figure 2 présente une bague à rattrapage de jeu radial mise en oeuvre selon l'invention ;
- la figure 3 illustre la coupe longitudinale d'un store à enrouleur selon un mode de réalisation de l'invention, dans lequel un bouchon est mis en oeuvre.

L'invention propose donc une technique permettant de rattraper le jeu radial entre le tube d'enroulement et le (ou les) patins équipant ses extrémités, de façon à limiter les vibrations et les bruits dont elles sont à l'origine. Pour cela, une bague essentiellement cylindrique présentant au moins deux renflements au niveau desquels son diamètre extérieur est plus important, ainsi que des pattes distinctes légèrement recourbées et dirigées vers l'intérieur de la bague, est utilisée. Celle-ci permet d'assurer le contact simultanément avec l'intérieur du tube d'enroulement et avec la portion pénétrante du patin, ce qui permet de supprimer le jeu radial, la bague s'adaptant aux dimensions respectives de ceux-ci, tout en autorisant la rotation du tube d'enroulement par rapport au(x) patin(s).

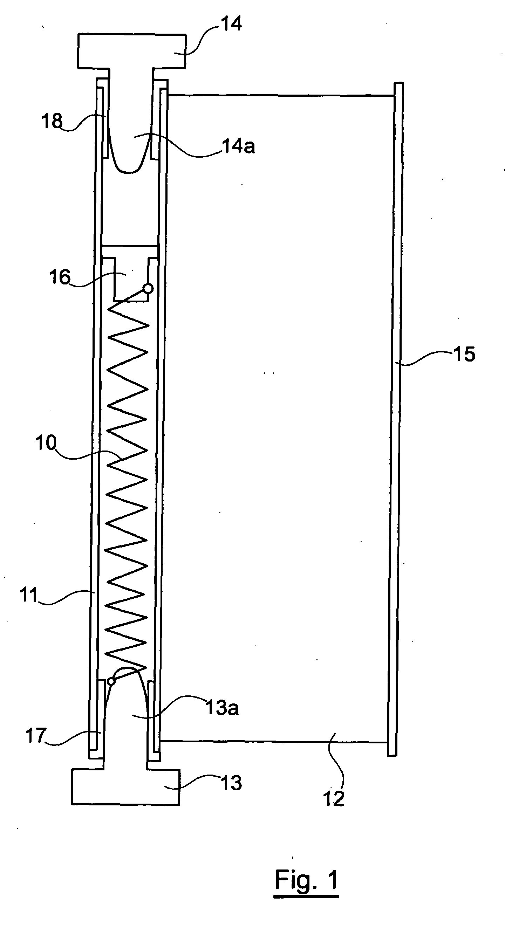

La figure 1 illustre la coupe longitudinale d'un store à enrouleur selon l'art antérieur. D'une façon générale, le store comprend un tube d'enroulement 11, sur lequel est montée une toile 12 dont l'extrémité libre est équipée d'une barre de tirage 15. Le tube 11 reçoit à ses extrémités deux paliers 13 et 14.

Un ressort 10 est monté à l'intérieur du tube d'enroulement 11. La portion pénétrante 13a d'un premier palier 13 est solidaire d'une extrémité du ressort 10. L'autre extrémité du ressort 10 est solidaire du tube 11, par exemple par l'intermédiaire d'un élément de solidarisation 16 monté à l'intérieur du tube d'enroulement 11 et solidaire en rotation de celui-ci.

L'extrémité de l'élément de solidarisation 16 et de la partie pénétrante 13a du premier palier 13 pourront par exemple présenter un filetage ou un élément d'accrochage des extrémités du ressort 10.

Dans le cas de la figure 1, deux bagues 17, 18 cylindriques et creuses sont montées à l'intérieur du tube d'enroulement 11, au niveau de chacune de ses extrémités. Les portions pénétrantes 13a et 14a des paliers 13, 14 sont logées respectivement à l'intérieur des bagues 17, 18.

Les bagues 17, 18 autorisent la rotation du tube d'enroulement 11 lors du déploiement et du repliement de la toile 12, par rapport aux paliers 13, 14 montés fixes dans un boîtier par exemple. Les bagues 17, 18 sont en général solidaires du tube d'enroulement 11, celles-ci pouvant par exemple être collées à l'intérieur du tube.

De telles bagues permettent de limiter les frottements lors de la rotation du tube d'enroulement et assurent généralement le centrage des paliers 13, 14 par rapport à l'axe de rotation du tube d'enroulement 11.

Cependant, il existe dans la plupart des cas un jeu radial entre le palier et la bague à l'intérieur de laquelle il est monté ou encore entre la bague et le tube d'enroulement si celle-ci n'est pas solidaire du tube.

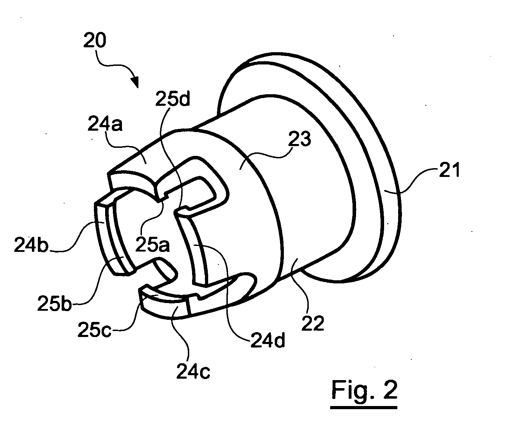

La figure 2 illustre une bague 20 selon l'invention. Celle-ci présente une collerette 21 de diamètre supérieur au diamètre intérieur du tube d'enroulement et logée à l'extérieur du tube d'enroulement lorsque la bague est montée dans le tube, comme cela sera illustré par la suite. Elle présente en outre une partie cylindrique 22 située en amont d'un renflement 23 au niveau duquel le diamètre extérieur de la bague 20 est supérieur au diamètre de la partie cylindrique 22.

Le renflement 23, tel que représenté, est continu et de hauteur uniforme. La largeur de celui-ci formant la surface de contact contre le tube d'enroulement lorsque la bague 20 est montée pourra par exemple être de 1,5 à 2 mm.

L'extrémité de la bague 20 présente quatre pattes 24a, 24b, 24c, 24d distinctes, séparées par des évidements, et situées dans le prolongement du renflement 23.

Les pattes 24a, 24b, 24c, 24d sont réparties de façon homogène et situées face à face, deux à deux. La présence des évidements entre les pattes 24a, 24b, 24c, 24d (et donc le fait qu'elles soient distinctes les unes des autres) permet de conférer à celles-ci une certaine souplesse.

Les extrémités pattes 24a, 24b, 24c, 24d sont légèrement recourbées et dirigées vers l'intérieur de la bague 20, de façon à définir respectivement une surface d'appui 25a, 25b, 25c, 25d contre le palier autour duquel elle est destinée à être montée.

Les surfaces d'appui 25a, 25b, 25c, 25d des pattes 24a, 24b, 24c, 24d pourront par exemple former une surface de 1mm de large environ.

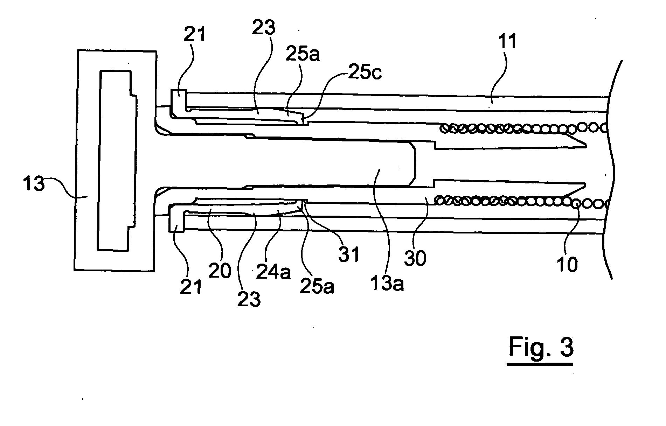

La figure 3 présente une partie d'un tube d'enroulement 11 selon l'invention au niveau d'une de ses extrémités, équipé d'une bague 20 selon la figure 2. Des références numériques identiques désignent des éléments identiques sur les figures 1 à 3.

La bague 20 est montée à l'intérieur du tube d'enroulement 11, et la partie pénétrante 13a du premier palier 13 est logée à l'intérieur de la bague 20.

Selon le mode de réalisation représenté par la figure 3, un bouchon 30 est monté entre le palier 13 et la bague 20. Plus précisément, le bouchon est monté sur la portion pénétrante 13a du palier 13. Celui-ci peut par exemple présenter une section intérieure carrée destinée à coopérer avec la portion pénétrante 13a du palier 13, de section carrée complémentaire, de façon que celui-ci soit solidaire en rotation du palier 13.

La section extérieure du bouchon pourra être circulaire, de façon à coopérer avec la bague 20.

Lorsqu'un bouchon 30 est présent, l'extrémité du ressort 10 pourra être monté sur le bouchon 30 plutôt que sur le palier 13, le bouchon présentant alors des moyens de fixation du ressort 10.

La bague 20, grâce à sa forme, s'adapte alors aux dimensions respectives du tube d'enroulement 11 et de la portion pénétrante 13a du palier 13 et assure un contact avec le tube d'enroulement 11 et avec le bouchon 30.

Le renflement 23 de la bague 20 est en effet en contact avec l'intérieur du tube d'enroulement 11, et les extrémités 25a, 25b, 25c, 25d des pattes 24a, 24b, 24c, 24d sont en contact avec la surface extérieure du bouchon 30.

La bague 20 pourra être réalisée par moulage dans une même pièce de matériau, tel que le téflon ou le PTFE (Polytétrafluoroéthylène) par exemple. De préférence, la bague est réalisée dans un matériau légèrement déformable et présentant un faible coefficient de frottement.

Le bouchon 30 présente un méplat 31 au niveau duquel les extrémités 25a, 25b, 25c, 25d des pattes 24a, 24b, 24c, 24d sont en appui.

La bague 20 permet ainsi de compenser le jeu radial pouvant exister entre la portion 13a du palier 13, le tube d'enroulement 11 et le bouchon 30 lorsqu'il est présent.

Une fois en place, celle-ci pourra être libre en rotation par rapport au tube d'enroulement 11 et/ou par rapport au bouchon 30, du moment que celle-ci permet la rotation du tube 11 par rapport au bouchon 30 (et donc par rapport au palier 13). On pourra également prévoir de solidariser arbitrairement la bague 20 au tube d'enroulement 11, par collage par exemple.

On comprend bien sûr que l'invention peut être mise en oeuvre sans la présence d'un bouchon 30, les extrémités 25a, 25b, 25c, 25d des pattes 24a, 24b, 24c, 24d étant alors en contact avec la portion pénétrante 13a du palier 13.

De plus, d'autres variantes de l'invention quant aux nombre de pattes par exemple pourront être envisagée. De la même façon, le renflement 23, formant une couronne continue telle que représenté sur les figures 2 et 3, pourra comprendre au moins deux renflements distincts par exemple, sur un même diamètre de la bague. Les renflements pourront alors être situés de façon qu'ils soient alignés avec les pattes de façon que celles-ci soient dans le prolongement des renflements.

Une bague 20 telle que représentée par la figure 2 pourra bien sûr être utilisée pour équiper les deux extrémités d'un tube d'enroulement de façon à supprimer le jeu radial.

## Revendications

1. Store à enrouleur comprenant un tube d'enroulement (11), équipé d'un palier (13, 14) présentant une portion pénétrante (13a, 14a) logée à l'intérieur dudit tube d'enroulement (11) à chacune de ses extrémités, et auquel est solidarisée une extrémité d'une toile d'occultation (12), mobile entre une position déployée et une position repliée, dans laquelle elle est essentiellement enroulée autour dudit tube d'enroulement (11),
**caractérisé en ce qu'**il comprend au moins une bague (20) déformable montée à l'intérieur dudit tube d'enroulement (11) autour d'une portion pénétrante (13a) d'un premier palier (13), ladite bague (20) présentant une partie d'extrémité comprenant :
- au moins deux renflements (23) situés sur un même diamètre de la bague (20) ; et
- au moins deux pattes (24a, 24b, 24c, 24d) distinctes, dont les extrémités libres (25a, 25b, 25c, 25d) sont dirigées vers l'intérieur de ladite bague (20) ;
lesdites pattes (24a, 24b, 24c, 24d) étant situées dans le prolongement desdits renflements (23), de façon que, lorsque ladite portion pénétrante (13a) dudit premier palier (13) est logée dans ladite bague (20), lesdites extrémités (25a, 25b, 25c, 25d) desdites pattes (24a, 24b, 24c, 24d) sont en contact avec ladite portion pénétrante (13a) dudit premier palier (13) et lesdits renflements (23) sont en contact avec ledit tube d'enroulement (11).

2. Store à enrouleur selon la revendication 1, **caractérisé en ce que** ladite bague (20) est réalisée dans un matériau présentant un faible coefficient de frottement.

3. Store à enrouleur selon l'une quelconque des revendications 1 et 2, **caractérisé en ce que** lesdits renflements (23) forment une couronne continue dont la surface supérieure est en contact avec ledit tube d'enroulement (11).

4. Store à enrouleur selon l'une quelconque des revendications 1 à 3, **caractérisé en ce que** ladite bague (20) comprend trois pattes équidistantes les unes des autres.

5. Store à enrouleur selon l'une quelconque des revendications 1 à 3, **caractérisé en ce que** ladite bague comprend quatre pattes (24a, 24b, 24c, 24d) équidistantes les unes des autres.

6. Store à enrouleur selon l'une quelconque des revendications 1 à 5, **caractérisé en ce que** ladite bague (20) est réalisée par moulage.

7. Store à enrouleur selon l'une quelconque des revendications 1 à 6, **caractérisé en ce qu'**il comprend un bouchon (30) creux de surface extérieure cylindrique monté autour de ladite portion pénétrante (13a) dudit premier palier (13), et solidaire en rotation dudit premier palier (13), de façon que lesdites extrémités (25a, 25b, 25c, 25d) desdites pattes (24a, 24b, 24c, 24d) de ladite bague (20) soient en contact avec la surface extérieure dudit bouchon (30).

8. Store à enrouleur selon la revendication 7, **caractérisé en ce que** la section intérieure dudit bouchon (30) est de forme polygonale et **en ce que** la section extérieure de ladite portion pénétrante (13a) dudit premier palier (13) autour de laquelle elle est montée ledit bouchon (30) est d'une forme polygonale complémentaire.

9. Store à enrouleur selon l'une quelconque des revendications 1 à 8, **caractérisé en ce que** ladite portion pénétrante (13a) dudit premier palier (13) ou ledit bouchon (30) présente un méplat (31) ou une rainure avec lequel lesdites extrémités (25a, 25b, 25c, 25d) desdites pattes (24a, 24b, 24c, 24d) sont en contact.

10. Véhicule automobile **caractérisé en ce qu'**il comprend au moins un store enrouleur selon l'une quelconque des revendications 1 à 9.

## Patentansprüche

1. Rollvorhang mit Aufwickler, umfassend ein Aufwickelrohr (11), das mit einem Lager (13, 14) ausgestattet ist, der einen Eindringabschnitt (13a, 14a) umfasst, der im Inneren des Aufwickelrohrs (11) an jedem seiner Enden vorgesehen ist, und mit dem ein Ende eines Verdunkelungsvorhangs (12) verbunden ist, der zwischen einer ausgefahrenen Position und einer eingefahrenen Position, in der er im Wesentlichen um das Aufwickelrohr (11) gewickelt ist, beweglich ist,
**dadurch gekennzeichnet, dass** er mindestens einen verformbaren Ring (20) umfasst, der im Inneren des Aufwickelrohrs (11) um einen Eindringabschnitt (13a) eines ersten Lagers (13) montiert ist, wobei der Ring (20) ein Endteil aufweist, umfassend:
- mindestens zwei Wülste (23), die sich auf einem selben Durchmesser des Ringes (20) befinden; und
- mindestens zwei unterschiedliche Stifte (24a, 24b, 24c, 24d), deren freie Enden (25a, 25b, 25c, 25d) auf das Innere des Ringes (20) gerichtet sind;
wobei die Stifte (24a, 24b, 24c, 24d) in der Verlängerung der Wülste (23) angeordnet sind, so dass, wenn der Eindringabschnitt (13a) des ersten Lagers (13) in dem Ring (20) angeordnet ist, die Enden (25a, 25b, 25c, 25d) der Stifte (24a, 24b, 24c, 24d) mit dem Eindringabschnitt (13a) des ersten Lagers (13) in Kontakt sind und die Wülste (23) mit dem Aufwickelrohr (11) in Kontakt sind.

2. Rollvorhang mit Aufwickler nach Anspruch 1, **dadurch gekennzeichnet, dass** der Ring (20) aus einem Material hergestellt ist, das einen geringen Reibbeiwert aufweist.

3. Rollvorhang mit Aufwickler nach einem der Ansprüche 1 und 2, **dadurch gekennzeichnet, dass** die Wülste (23) einen durchgehenden Kranz bilden, dessen Oberseite mit dem Aufwickelrohr (11) in Kontakt ist.

4. Rollvorhang mit Aufwickler nach einem der Ansprüche 1 bis 3, **dadurch gekennzeichnet, dass** der Ring (20) drei Stifte in gleichen Abständen zueinander umfasst.

5. Rollvorhang mit Aufwickler nach einem der Ansprüche 1 bis 3, **dadurch gekennzeichnet, dass** der Ring vier Stifte (24a, 24b, 24c, 24d) in gleichen Abständen zueinander umfasst.

6. Rollvorhang mit Aufwickler nach einem der Ansprüche 1 bis 5, **dadurch gekennzeichnet, dass** der Ring (20) mittels Gießen hergestellt ist.

7. Rollvorhang mit Aufwickler nach einem der Ansprüche 1 bis 6, **dadurch gekennzeichnet, dass** er einen hohlen Stöpsel (30) mit einer zylindrischen Außenfläche umfasst, der um den Eindringabschnitt (13a) des ersten Lagers (13) herum montiert ist und drehfest mit dem ersten Lager (13) verbunden ist, so dass die Enden (25a, 25b, 25c, 25d) der Stifte (24a, 24b, 24c, 24d) des Ringes (20) mit der Außenfläche des Stöpsels (30) in Kontakt sind.

8. Rollvorhang mit Aufwickler nach Anspruch 7, **dadurch gekennzeichnet, dass** der Innenquerschnitt des Stöpsels (30) polygonförmig ist, und dass der Außenquerschnitt des Eindringabschnitts (13a) des ersten Lagers (13), um den der Stöpsel (30) montiert ist, komplementär polygonförmig ist.

9. Rollvorhang mit Aufwickler nach einem der Ansprüche 1 bis 8, **dadurch gekennzeichnet, dass** der Eindringabschnitt (13a) des ersten Lagers (13) oder der Stöpsel (30) eine Abflachung (31) oder eine Nut aufweist, mit der die Enden (25a, 25b, 25c, 25d) der Stifte (24a, 24b, 24c, 24d) in Kontakt sind.

10. Kraftfahrzeug, **dadurch gekennzeichnet, dass** es mindestens einen Rollvorhang mit Aufwickler nach einem der Ansprüche 1 bis 9 umfasst.

## Claims

1. Roller blind comprising a winding tube (11) which is equipped with a bearing (13, 14) having a penetrating portion (13a, 14a) accommodated inside the said winding tube (11) at each of its ends, and to which there is fastened one end of a screening cloth (12) which can be moved between an opened-out position and a rolled-up position in which it is essentially wound around the said winding tube (11),
**characterised in that** said roller blind comprises at least one deformable ring (20) which is mounted inside the said winding tube (11) around a penetrating portion (13a) of a first bearing (13), the said ring (20) having an end part comprising:
- at least two bosses (23) which are situated on the same diameter of the ring (20); and
- at least two distinct feet (24a, 24b, 24c, 24d), the free ends (25a, 25b, 25c, 25d) of which are directed towards the inside of the said ring (20);
the said feet (24a, 24b, 24c, 24d) being situated in the extension of the said bosses (23) in such a way that, when the said penetrating portion (13a) of the said first bearing (13) is accommodated in the said ring (20), the said ends (25a, 25b, 25c, 25d) of the said feet (24a, 24b, 24c, 24d) are in contact with the said penetrating portion (13a) of the said first bearing (13) and the said bosses (23) are in contact with the said winding tube (11).

2. Roller blind according to Claim 1, **characterised in that** the said ring (20) is produced from a material having a low coefficient of friction.

3. Roller blind according to either of Claims 1 or 2, **characterised in that** the said bosses (23) form a continuous crown, the upper surface of which is in contact with the said winding tube (11).

4. Roller blind according to any of Claims 1 to 3, **characterised in that** the said ring (20) comprises three feet which are equidistant from one another.

5. Roller blind according to any of Claims 1 to 3, **characterised in that** the said ring (20) comprises four feet (24a, 24b, 24c, 24d) which are equidistant from one another.

6. Roller blind according to any of Claims 1 to 5, **characterised in that** the said ring (20) is produced by moulding.

7. Roller blind according to any of Claims 1 to 6, **characterised in that** it comprises a hollow plug (30) with a cylindrical outer surface, which plug is mounted around the said penetrating portion (13a) of the said first bearing (13) and is integral in rotation with the said first bearing (13), in such a way that the said ends (25a, 25b, 25c, 25d) of the said feet (24a, 24b, 24c, 24d) of the said ring (20) are in contact with the outer surface of the said plug (30).

8. Roller blind according to Claim 7, **characterised in that** the internal cross-section of the said plug (30) has a polygonal shape, and **in that** the external cross-section of the said penetrating portion (13a) of the said first bearing (13), around which portion the said plug (30) is mounted, has a complementary polygonal shape.

9. Roller blind according to any of Claims 1 to 8, **characterised in that** the said penetrating portion (13a) of the said first bearing (13), or the said plug (30), has a flat (31) or a groove with which the said ends (25a, 25b, 25c, 25d) of the said feet (24a, 24b, 24c, 24d) are in contact.

10. Motor vehicle, **characterised in that** it comprises at least one roller blind according to any of Claims 1 to 9.
